# EUROPEAN PATENT SPECIFICATION

(11) **EP 4 074 518 B1**
(45) Date of publication and mention of the grant of the patent: **18.10.2023**
(21) Application number: 20897852.8
(22) Date of filing: 16.11.2020
(51) Int. Cl.: B60C 1/00, C08K 5/3492, C08L 21/00, C08L 101/00, C08L 63/00, B60C 7/00

(54) **RESIN COMPOSITION, RESIN-METAL COMPOSITE MEMBER, AND TIRE**
HARZZUSAMMENSETZUNG, HARZ-METALL VERBUNDWERKSTOFF UND REIFEN
COMPOSITION DE RÉSINE, ÉLÉMENT COMPOSITE RÉSINE-MÉTAL ET PNEU

(30) Priority: 12.12.2019 JP 2019224542
(43) Date of publication of application: 19.10.2022
(73) Proprietor: BRIDGESTONE CORPORATION, Chuo-ku Tokyo 104-8340 (JP)
(72) Inventor: KYO, Soichi, Tokyo 104-8340 (JP)
(74) Representative: Marks & Clerk LLP
(86) International application number: PCT/JP2020/042592
(87) International publication number: WO 2021/117419

(56) References cited:
- WO-A1-2018/230249
- WO-A1-2019/021671
- CN-A- 103 382 359
- CN-A- 108 034 182
- CN-A- 110 117 447
- JP-A- S62 267 378
- JP-A- 2019 001 361

## Description

### [Technical Field]

The present disclosure relates to a resin composition, a resin-metal composite member, and a tire.

### [Background Art]

Conventionally, as an attempt to enhance the durability (stress resistance, inner-pressure resistance, and rigidity) of a tire, a reinforcing belt member is provided at an outer periphery of a tire. The reinforcing belt member is formed by winding a reinforcing cord including a metal wire around an outer periphery of the tire in a spiral manner.

In addition, a tire is usually provided with a bead member, which functions to fix the tire to a rim, at a position at which the tire contacts the rim, and the bead member is also formed using a reinforcing cord.

As a reinforcing cord, for example, Japanese Patent Application Laid-Open (JP-A) No. 2019-1359 describes a resin-metal composite member for a tire, having a metal member, an adhesive layer and a cover resin layer in this order, wherein the adhesive layer includes a polyester thermoplastic elastomer having a polar functional group. WO 2018 230 249 A1, paragraph [0008] is directed to a resin-metal composite member for a tire that is a member including a metal member provided in a tire and is excellent in adhesion durability and moist heat durability. The examples 1-16 disclose compositions comprising a polyester thermoplastic elastomer and an epoxy resin.

### [Summary of the Invention]

### [Problem to be Solved by the Invention]

In the resin-metal composite member described in JP-A No. 2019-1359, the polyester thermoplastic elastomer having a polar functional group is used to form the adhesive layer, which is disposed between the metal member and the cover resin layer, in order to enhance the adhesion of the adhesive layer with respect to the metal member. On the other hand, it is found that an adhesive layer formed of a polyester thermoplastic elastomer having a polar functional group leaves room for improvement in cracking resistance.

In view of the foregoing, there is demand for a resin composition that achieves excellent adhesion with respect to a metal member and excellent cracking resistance. Moreover, there is also demand for a resin-metal composite member and a tire that are obtained using the resin composition that achieves excellent adhesion with respect to a metal member and excellent cracking resistance.

### [Means for Solving the Problem]

A resin composition, comprising a thermoplastic elastomer and an epoxy resin as resins, and a zinc cyanurate.

### [Effect of the Invention]

According to the present disclosure, a resin composition that achieves excellent adhesion with respect to a metal member and excellent cracking resistance, and a resin-metal composite member and a tire that are obtained using the resin composition that achieves excellent adhesion with respect to a metal member and excellent cracking resistance, are provided.

### [Brief Explanation of the Drawings]

FIG. 1A is a perspective view illustrating a cross-section of a part of a tire according to a first embodiment;
FIG. 1B is a cross-sectional view illustrating a bead portion attached to a rim;
FIG. 2 is a cross-sectional view taken along a tire rotation axis, which illustrates a state where a reinforcing cord is embedded in a crown portion of a tire frame of the tire according to the first embodiment;
FIG. 3 is a drawing for explaining operations of embedding the reinforcing cord in the crown portion of the tire frame using a reinforcing cord heater and rollers; and
FIG. 4 is a perspective view illustrating a cross-section of a part of a tire according to the second embodiment.

### [Mode for Carrying Out the Invention]

Specific embodiments of the disclosure are described below in detail; however, the disclosure is not restricted to the below-described embodiments by any means, and the disclosure can be carried out with modifications as appropriate within the scope of the disclosure.

The term "resin" used herein is a concept that encompasses thermoplastic resins, thermoplastic elastomers and thermosetting resins, but not vulcanized rubbers.

In the following explanation, resins of the "same kind" refers to resins having a structure that forms a main chain that is in in common with each other, such as a combination of ester-based resins or a combination of styrene-based resins.

In the present specification, the numerical ranges described as "from ... to ..." includes the lower limit value and the upper limit value, respectively.

The term "step" used herein encompasses not only an independent step but also a step that cannot be clearly distinguished from other steps, as long as the intended purpose of the step is achieved.

In the present specification, the term "thermoplastic resin" refers to a polymer compound that becomes soft and fluid as the temperature is increased and becomes relatively hard as the temperature is decreased, but does not exhibit rubber-like elasticity.

In the present specification, the term "thermoplastic elastomer" refers to a copolymer having a hard segment and a soft segment. Examples of the thermoplastic elastomer include a polymer compound that becomes soft and fluid as the temperature is increased and becomes relatively hard as the temperature is decreased, and exhibits rubber-like elasticity. Specific examples of the thermoplastic elastomer include a copolymer having a polymer that constitutes a hard segment, which is crystalline and has a high melting point or a high cohesive strength, and a polymer that constitutes a soft segment, which is amorphous and has a low glass transition temperature.

The hard segment refers to a component that is relatively harder than the soft segment. The hard segment is preferably a molecular-constraint component that functions as a crosslinkage point of a crosslinked rubber and suppresses plastic deformation. Examples of the hard segment include a structure in which a rigid group such as an aromatic group or an alicyclic group is included in the main backbone; and a structure that enables intermolecular packing by means of hydrogen bond or π-π interaction.

The soft segment refers to a component that is relatively softer than the hard segment. The soft segment is preferably a flexible component that exhibits rubber-like elasticity, and examples thereof include a structure that has a long-chain group (such as a long-chain alkylene group) in the main chain, and exhibits a high degree of freedom of molecular rotation elasticity and stretchability.

### <Resin Composition>

The resin composition according to the present embodiment includes a thermoplastic elastomer and an epoxy resin as resins, and zinc cyanurate.

The resin composition having a configuration as specified above exhibits excellent adhesion with respect to a metal member and exhibits excellent cracking resistance, as compared with a thermoplastic elastomer having a polar functional group.

Although it is not exactly clear why the resin composition exhibits excellent adhesion, one reason may be that some form of interaction is caused between epoxy groups in the resin composition and a surface of a metal member. Further, the present inventors have found an unknown fact that the adhesion of the resin composition is improved by including zinc cyanurate together with an epoxy resin.

Although it is not exactly clear why the resin composition exhibits excellent cracking resistance as compared with a thermoplastic elastomer having a polar functional group, one reason may be that a decrease in molecular size of a thermoplastic elastomer is suppressed by blending an epoxy resin as a different component from the thermoplastic elastomer, whereas the molecular size of a thermoplastic elastomer having a polar functional group tends to decrease due to severance of molecules caused by introduction of polar functional groups.

In the following, components included in the resin composition are explained.

In the present disclosure, a resin that is a thermoplastic elastomer or a thermoplastic resin (for example, a thermoplastic elastomer or a thermoplastic resin having an epoxy group in its molecule) is not included in the "epoxy resin".

### (Epoxy resin)

The type of the epoxy resin is not particularly limited, and examples thereof include novolac epoxy resin, dicyclopentadiene epoxy resin, triphenylmethane epoxy resin, bisphenol epoxy resin, biphenyl epoxy resin, glycidylamine epoxy resin, naphthalene epoxy resin and linear aliphatic epoxy resin. The resin composition may include a single kind of epoxy resin or two or more kinds thereof.

From the viewpoint of mixability with a thermoplastic elastomer, the epoxy resin is preferably in a solid form at normal temperature. For example, an epoxy resin having a softening point measured by a ring-and-ball method of from 50°C to 100°C is preferred.

From the viewpoint of moisture resistance, an epoxy resin having a low water absorption rate, such as an epoxy resin having an alicyclic structure or a naphthalene structure in its molecule, is preferred. Specific examples of the alicyclic structure include a cyclopropane structure, a cyclobutane structure, a cyclopentane structure, a cyclohexane structure, a cycloheptane structure, a cyclooctane structure, a cubane structure, a norbornane structure, a tetrahydrodicyclopentadiene structure, an adamantane structure, a diadamantane structure, a bicyclo[2,2,2]octane structure, a decahydronaphthalene structure, and a spiro-ring structure such as a spiro[5.5]undecane structure. Among these, an epoxy resin having a tetrahydrodicyclopentadiene structure (i.e., dicyclopentadiene epoxy resin) is preferred.

From the viewpoint of achieving a sufficient degree of improvement in cracking resistance, the content of the epoxy resin with respect to a total amount of the resin composition is preferably 15% by mass or less, more preferably 12.5% by mass or less, further preferably 10% by mass or less.

From the viewpoint of achieving a sufficient degree of improvement in adhesion, the content of the epoxy resin with respect to a total amount of the resin composition is preferably 1% by mass or more, more preferably 2% by mass or more, further preferably 5% by mass or more.

The epoxy equivalent of the epoxy resin is preferably from 100 g/eq to 300 g/eq. When the epoxy equivalent of the epoxy resin is 100 g/eq or more, it is possible to include a sufficient amount of epoxy groups in a resin layer with a certain amount of addition of the epoxy resin, thereby improving the adhesion with respect to a metal member in an efficient manner. When the epoxy equivalent of the epoxy resin is 300 g/eq or less, it is possible to include a sufficient amount of epoxy groups in a resin with a small amount of addition of the epoxy resin, without affecting the physical properties of the resin, thereby improving the adhesion with respect to a metal member in an efficient manner.

From the viewpoint of optimizing the number of epoxy groups in the resin composition, the value of A/B, wherein A is a content of the epoxy resin with respect to a total amount of the resin composition (% by mass) and B is an epoxy equivalent of the epoxy resin (g/eq), is preferably from 0.003 to 0.15, more preferably from 0.017 to 0.1, further preferably from 0.04 to 0.06.

### (Thermoplastic elastomer)

The thermoplastic elastomer included in the resin composition is not particularly limited, and examples thereof include the thermoplastic elastomers as defined in JIS K6418, such as polyester thermoplastic elastomer, polyamide thermoplastic elastomer, polystyrene thermoplastic elastomer, polyurethane thermoplastic elastomer, polyolefin thermoplastic elastomer, thermoplastic vulcanizate and other thermoplastic elastomers. The resin composition may include a single kind of thermoplastic elastomer or two or more kinds thereof.

From the viewpoint of improving the cracking resistance, the thermoplastic elastomer included in the resin composition preferably does not have a polar functional group (such as an epoxy group, a carboxy group, an acid anhydride group or an amino group). The resin composition may include a thermoplastic elastomer having a polar functional group within a range in which the effect as set forth above is not impaired.

From the viewpoint of suppressing the reaction with an epoxy group in the epoxy resin, the resin composition preferably include a polyester thermoplastic elastomer as the thermoplastic elastomer.

### -Polyester thermoplastic elastomer-

The polyester thermoplastic elastomer is, for example, a polymer compound in which at least a polyester forms a hard segment that is crystalline and has a high melting point, and a soft segment that is amorphous and has a low glass transition temperature is formed from a different polymer (for example, polyester or polyether).

Examples of a polyester that forms a hard segment of a polyester thermoplastic elastomer include an aromatic polyester. The aromatic polyester can be formed from, for example, an aromatic dicarboxylic acid or an ester-forming derivative thereof, and an aliphatic diol. The aromatic polyester is preferably polybutylene terephthalate, which is derived from at least one of terephthalic acid or dimethyl terephthalate and 1,4-butanediol. The aromatic polyester may be a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof) and a diol having a molecular weight of 300 or less, such as an aliphatic diol (e.g., ethylene glycol, trimethylene glycol, pentamethylene glycol, hexamethylene glycol, neopentyl glycol or decamethylene glycol), an alicyclic diol (e.g., 1,4-cyclohexane dimethanol or tricyclodecane dimethylol) or an aromatic diol (e.g., xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-*p*-quaterphenyl); or may be a copolymerized polyester in which two or more kinds of these dicarboxylic acid components and diol components are used in combination. Further, for example, a polyfunctional carboxylic acid component, a polyfunctional oxyacid component or a polyfunctional hydroxy component, which has three or more functional groups, can be copolymerized at an amount of 5% by mole or less.

Specific examples of the polyester that forms a hard segment include polyethylene terephthalate, polybutylene terephthalate, polymethylene terephthalate, polyethylene naphthalate and polybutylene naphthalate, among which polybutylene terephthalate is preferred.

Examples of a polymer that forms a soft segment include an aliphatic polyester and an aliphatic polyether.

Examples of the aliphatic polyether include poly(ethylene oxide) glycol, polypropylene oxide) glycol, poly(tetramethylene oxide) glycol, poly(hexamethylene oxide) glycol, copolymers of ethylene oxide and propylene oxide, ethylene oxide-addition polymers of polypropylene oxide) glycol, and copolymers of ethylene oxide and tetrahydrofuran.

Examples of the aliphatic polyester include poly(ε-caprolactone), polyenantholactone, polycaprylolactone, polybutylene adipate, and polyethylene adipate.

Among these aliphatic polyethers and aliphatic polyesters, from the standpoint of elastic properties of the resulting polyester block copolymer, poly(tetramethylene oxide) glycol, an ethylene oxide-adduct of polypropylene oxide) glycol, poly(ε-caprolactone), polybutylene adipate and polyethylene adipate are preferred as the polymer that forms a soft segment.

From the standpoints of toughness and flexibility at low temperature, the number-average molecular weight of the polymer that forms a soft segment is preferably from 300 to 6,000. Further, from the standpoint of moldability, the mass ratio (x:y) of the hard segment (x) and the soft segment (y) is preferably from 99:1 to 20:80, more preferably from 98:2 to 30:70.

Examples of the combination of the hard segment and the soft segment as mentioned above include each of the exemplary combination of the hard segment and the soft segment as mentioned above. Among the exemplary combinations, a combination of polybutylene terephthalate as a hard segment and an aliphatic polyether as a soft segment is preferred, and a combination of polybutylene terephthalate as a hard segment and poly(ethylene oxide)glycol as a soft segment is more preferred.

Examples of the commercially available products of a polyester thermoplastic elastomer include the HYTREL Series manufactured by DuPont-Toray Co., Ltd. (e.g., 3046, 4047, 4767, 5557, 6347, 6377 and 7247), the PELPRENE Series manufactured by TOYOBO Co., Ltd. (e.g., P30B, P40B, P40H, P55B, P70B, P150B, P280B, P450B, P150M, S1001, S2001, S5001, S6001 and S9001).

The polyester thermoplastic elastomer can by synthesized by copolymerizing a polymer that forms a hard segment and a polymer that forms a soft segment by a known method.

### -Polyamide thermoplastic elastomer-

The polyamide thermoplastic elastomer refers to a thermoplastic resin material that is a copolymer formed of a polymer that forms a hard segment that is crystalline and has a high melting point and a polymer that forms a soft segment that is amorphous and has a low glass transition temperature, wherein the polymer that forms a hard segment includes an amide bond (-CONH-) in its main chain.

Examples of the polyamide thermoplastic elastomer include a material in which at least a polyamide forms a hard segment that is crystalline and has a high melting point, and a polymer other than the polyamide (such as polyester or polyether) forms a soft segment that is amorphous and has a low glass transition temperature.

The polyamide thermoplastic elastomer may be formed by using a chain elongating agent (such as a dicarboxylic acid) in addition to the hard segment and the soft segment.

Specific examples of the polyamide thermoplastic elastomer include the polyamide thermoplastic elastomer (TPA) as defined in JIS K6418:2007 and the polyamide elastomer described in JP-A No. 2004-346273.

In the polyamide thermoplastic elastomer, examples of the polyamide that forms a hard segment include a polyamide formed from a monomer represented by the following Formula (1) or Formula (2).

H₂N-R¹-COOH (1)

In Formula (1), R¹ represents a hydrocarbon molecular chain having 2 to 20 carbon atoms (for example, an alkylene group having 2 to 20 carbon atoms).

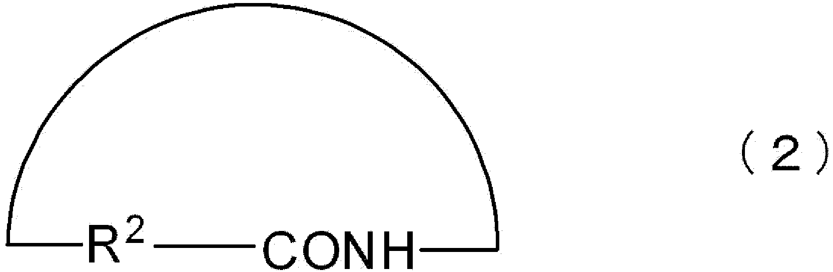

In Formula (2), R² represents a hydrocarbon molecular chain having 3 to 20 carbon atoms (for example, an alkylene group having 3 to 20 carbon atoms).

In Formula (1), R¹ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

In Formula (2), R² is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

Examples of the monomer represented by Formula (1) or Formula (2) include a ω-aminocarboxylic acid and a lactam. Examples of the polyamide that forms a hard segment include a polycondensate of a ω-aminocarboxylic acid or a lactam, and a polycondensate of a diamine and a dicarboxylic acid.

Examples of the ω-aminocarboxylic acid include aliphatic ω-aminocarboxylic acids having 5 to 20 carbon atoms, such as 6-aminocaproic acid, 7-aminoheptanoic acid, 8-aminooctanoic acid, 10-aminocapric acid, 11-aminoundecanoic acid and 12-aminododecanoic acid.

Examples of the lactam include aliphatic lactams having 5 to 20 carbon atoms, such as lauryllactam, ε-caprolactam, undecalactam, ω-enantholactam and 2-pyrrolidone.

Examples of the diamine include aliphatic diamines having 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-triemthylhexamethylenediamine, 2,4,4-trimethylhexamethylenediamine, 3-methylpentamethylenediamine and m-xylylenediamine.

The dicarboxylic acid may have a structure represented by HOOC-(R³)ₘ-COOH (R³ is a hydrocarbon molecular chain having 3 to 20 carbon atoms, and m is 0 or 1), and examples thereof include aliphatic dicarboxylic acids having 2 to 20 carbon atoms, such as oxalic acid, succinic acid, glutaric acid, adipic acid, pimelic acid, subric acid, azelaic acid, sebacic acid and dodecanedioic acid.

As the polyamide that forms a hard segment, a polyamide obtained by ring-opening polycondensation of lauryllacram, ε-caprolactam or udecanelactam is preferred.

Examples of the polymer that forms a soft segment include polyester and polyether, and specific examples thereof include polyethyelne glycol, polypropylene glycol, polytetramethylene ether glycol, and ABA-type triblock polyether. These polymers may be used alone or in combination of two or more kinds. It is also possible to use a polyether diamine or the like, which is obtained by allowing ammonia or the like to react with a terminal end of a polyether.

The ABA-type triblock polyether refers to a polyether having a structure represented by the following Formula (3).

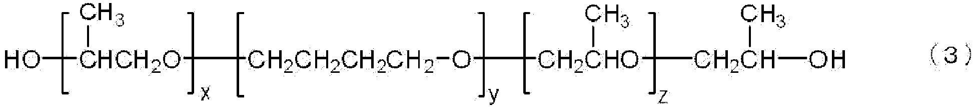

In Formula (3), each of x and z independently represents an integer of from 1 to 20, and y represents an integer of from 4 to 50.

In Formula (3), each of x and z is preferably independently an integer of from 1 to 18, more preferably an integer of from 1 to 16, further preferably an integer of from 1 to 14, yet further preferably an integer of from 1 to 12. In Formula (3), y is preferably an integer of from 5 to 45, more preferably an integer of from 6 to 40, further preferably an integer of from 7 to 35, yet further preferably an integer of from 8 to 30.

Examples of the combination of a hard segment and a soft segment include combinations of these selected from the hard segments and the soft segments as described above. Among the combinations, a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and ABA-type triblock polyether are preferred. Among these combinations, a combination of a ring-opening polycondensate of lauryl lactam and ABA-type triblock polyether is more preferred.

The number average molecular weight of the polymer that forms a hard segment (polyamide) is preferably from 300 to 15000, from the viewpoint of melt moldability. The number average molecular weight of the polymer that forms a soft segment is preferably from 200 to 6000 from the viewpoint of toughness and low-temperature flexibility. The mass ratio (x : y) of the hard segment (x) and the soft segment (y) is preferably from 50 : 50 to 90 : 10, more preferably from 50 : 50 to 80 : 20, from the viewpoint of moldability.

The polyamide thermoplastic elastomer can be synthesized by a known process of copolymerizing a polymer that forms a hard segment and a polymer that forms a soft segment.

Examples of the commercially available products of the polyamide thermoplastic elastomer include the UBESTA XPA series of Ube Industries, Ltd. (for example, XPA9063X1, XPA9055X1, XPA9048X2, XPA9048X1, XPA9040X1, XPA9040X2 and XPA9044) and the VESTAMID series of Daicel-Evonik Ltd. (for example, E40-S3, E47-S1, E47-S3, E55-S1, E55-S3, EX9200 and E50-R2).

### -Polystyrene thermoplastic elastomer-

Examples of the polystyrene thermoplastic elastomer include a material in which at least polystyrene forms a hard segment, and a polymer other than the polystyrene (such as polybutadiene, polyisoprene, polyethylene, hydrogenated polybutadiene or hydrogenated polyisoprene) forms a soft segment that is amorphous and has a low glass transition temperature.

Examples of the polystyrene that forms a hard segment include a polystyrene obtained by a known process such as radical polymerization or ionic polymerization, and specific examples thereof include a polystyrene obtained by anionic living polymerization.

Examples of the polystyrene that forms a soft segment include polybutadiene, polyisoprene and poly(2,3-dimethyl-butadiene).

Examples of the combination of a hard segment and a soft segment include combinations of these selected from the hard segments and the soft segments as described above. Among the combinations, a combination of polystyrene and polybutadiene and a combination of polystyrene and polyisoprene are preferred. In order to suppress unintentional crosslinking reaction of the thermoplastic elastomer, the soft segment is preferably hydrogenated.

The number average molecular weight of the polymer that forms a hard segment (polystyrene) is preferably from 5000 to 500000, more preferably from 10000 to 200000.

The number average molecular weight of the polymer that forms a soft segment is preferably from 5000 to 1000000, more preferably from 10000 to 800000, further preferably from 30000 to 500000. The mass ratio (x : y) of the hard segment (x) and the soft segment (y) is preferably from 5 : 95 to 80 : 20, more preferably from 10 : 90 to 70 : 30, from the viewpoint of moldability.

The polystyrene thermoplastic elastomer can be synthesized by a known process of copolymerizing a polymer that forms a hard segment and a polymer that forms a soft segment.

Examples of the polystyrene thermoplastic elastomer include styrene-butadiene copolymer such as SBS (polystyrene-poly(butylene)block-polystyrene) and SEBS (polystyrenepoly(ethylene/butylene)block-polystyrene); styrene-isoprene copolymer (polystyrene-polyisoprene block-polystyrene); and styrene-propylene copolymer such as SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)block-polystyrene) and SEB (polystyrene(ethylene/butylene)block).

Examples of the commercially available products of the polystyrene thermoplastic elastomer include the TUFTEC series of Asahi Kasei Corporation (for example, H1031, H1041, H1043, H1051, H1052, H1053, H1062, H1082, H1141, H1221 and H1272), and the SEBS series of Kuraray Co., Ltd (for example, 8007 and 8076) and the SEPS series of Kuraray Co., Ltd (for example, 2002 and 2063).

### -Polyurethane thermoplastic elastomer-

Examples of the polyurethane thermoplastic elastomer include a material in which at least polyurethane forms a hard segment that forms a pseudo-crosslinking structure by physical aggregation, and a polymer other than the polyurethane that forms a soft segment that is amorphous and has a low glass transition temperature.

Specific examples of the polyurethane thermoplastic elastomer include the polyurethane thermoplastic elastomer (TPU) as specified by JIS K6418:2007. The polyurethane thermoplastic elastomer may be a copolymer of a soft segment including a structural unit represented by the following Formula A and a hard segment including a structural unit represented by the following Formula B.

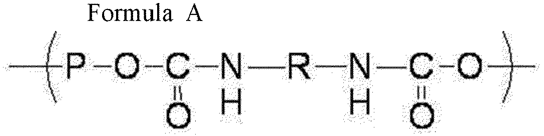

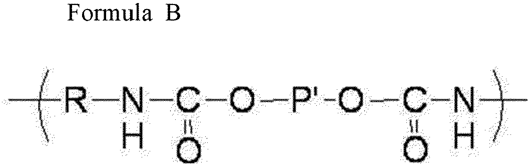

In the Formulae, P represents a long-chain aliphatic polyether or a long-chain aliphatic polyester. R represents an aliphatic hydrocarbon, an alicyclic hydrocarbon or an aromatic hydrocarbon. P' represents a short-chain aliphatic hydrocarbon, an alicyclic hydrocarbon or an aromatic hydrocarbon.

In Formula A, the long-chain aliphatic polyether or the long-chain aliphatic polyester represented by P may be a polyether or a polyester having a molecular weight of from 500 to 5000. The long-chain aliphatic polyether or the long-chain aliphatic polyester represented by P derives from a diol compound including the long-chain aliphatic polyether or the long-chain aliphatic polyester. Examples of the diol compound include polyethylene glycol, polypropylene glycol, polytetramethylene ether glycol, poly(butyleneadipate)diol, poly-ε-caprolactone diol, poly(hexamethylenecarbonate)diol and ABA-type triblock polyether compounds, having a molecular weight of the aforementioned range.

These compounds may be used alone or in combination of two or more kinds.

In Formula A and Formula B, R derives from a diisocyanate compound including an aliphatic hydrocarbon, an alicyclic hydrocarbon or an aromatic hydrocarbon that is represented by R.

Examples of the diisocyanate compound including an aliphatic hydrocarbon represented by R include 1,2-ethylene diisocyanate, 1,3-propylene diisocyanate, 1,4-butane diisocyanate and 1,6-hexamethylene diisocyanate.

Examples of the diisocyanate compound including an alicyclic hydrocarbon represented by R include 1,4-cyclohexane diisocyanate and 4,4-cyclohexane diisocyanate.

Examples of the diisocyanate compound including an aromatic hydrocarbon represented by R include 4,4'-diphenylmethane diisocyanate and tolylene diisocyanate.

These compounds may be used alone or in combination of two or more kinds.

In Formula B, examples of the short-chain aliphatic hydrocarbon, the alicyclic hydrocarbon or the aromatic hydrocarbon represented by P' include those having a molecular weight of less than 500. P' derives from a diol compound including the short-chain aliphatic hydrocarbon, the alicyclic hydrocarbon or the aromatic hydrocarbon represented by P'.

Examples of the diol compound including a short-chain aliphatic hydrocarbon represented by P' include glycol and polyalkylene glycol, such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of the diol compound including an alicyclic hydrocarbon represented by P' include cyclopentane-1,2-diol, cyclohexane-1,2-diol, cyclohexane-1,3-diol, cyclohexane-1,4-diol and cyclohexane-1,4-dimethanol.

Examples of the diol compound including an aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene and 2,6-dihydroxynaphthalene.

These compounds may be used alone or in combination of two or more kinds.

The number average molecular weight of the polymer that forms a hard segment (polyurethane) is preferably from 300 to 1500, from the viewpoint of melt moldability. The number average molecular weight of the polymer that forms a soft segment is preferably from 500 to 20000, more preferably from 500 to 5000, further preferably from 500 to 3000, from the viewpoint of flexibility and thermal stability of the polyurethane thermoplastic elastomer. The mass ratio (x : y) of the hard segment (x) and the soft segment (y) is preferably from 15 : 85 to 90 : 10, more preferably from 30 : 70 to 90 : 10, from the viewpoint of moldability.

The polyurethane thermoplastic elastomer may be synthesized by a known process of copolymerizing a polymer that forms a hard segment and a polymer that forms a soft segment. Examples of the polyurethane thermoplastic elastomer include the thermoplastic polyurethane described in JP-A No. 5-331256.

Specific examples of the polyurethane thermoplastic elastomer include a combination of a hard segment formed from an aromatic diol and an aromatic diisocyanate, and a soft segment formed from polycarbonate ester, preferably at least one selected from the group consisting of a copolymer of trilenediisocyanate (TDI) / polyester-based polyol, a copolymer of TDI / polyether-based polyol, a copolymer of TDI / caprolactone-based polyol, a copolymer of TDI / polycarbonate-based polyol, a copolymer of 4,4'-diphenylmethane diisocyanate (MDI) / polyester-based polyol, a copolymer of MDI / polyether-based polyol, a copolymer of MDI / caprolactone-based polyol, a copolymer of MDI / polycarbonate-based polyol, and a copolymer of MDI + hydroquinone / polyhexamethylene carbonate; more preferably at least one selected from the group consisting of a copolymer of TDI / polyester-based polyol, a copolymer of TDI / polyether-based polyol, a copolymer of MDI / polyester-based polyol, a copolymer of MDI / polyether-based polyol, and a copolymer of MDI + hydroquinone / polyhexamethylene carbonate.

Examples of the commercially available products of the polyurethane thermoplastic elastomer include the ELASTOLLAN series of BASF Japan Ltd. (for example, ET680, ET880, ET690 and ET890), the KURAMIRON U series of Kuraray Co., Ltd. (for example, No. 2000 series, No. 3000 series, No. 8000 series and No. 9000 series), and the MIRACTRAN series of Nippon Miractran Co., Ltd. (for example, XN-2001, XN-2004, P390RSUP, P480RSUI, P26MRNAT, E490, E590 and P890).

### -Polyolefin thermoplastic elastomer-

Examples of the polyolefin thermoplastic elastomer include materials in which at least a polyolefin forms a hard segment that is crystal and has a high melting point and a polymer other than the polyolefin that forms a soft segment (for example, polyolefin, other polyolefin and a polyvinyl compound) forms a soft segment that is amorphous and has a low glass transition temperature. Examples of the polyolefin that forms a hard segment include polyethylene, polypropylene, isotactic polypropylene and polybutene.

Examples of the polyolefin thermoplastic elastomer include an olefin-α-olefin random copolymer and an olefin block copolymer.

Specific examples of the polyolefin thermoplastic elastomer include propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, 1-butene-1-hexene copolymer, 1-butene-4-methyl-pentene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer, ethylene-vinyl acetate copolymer and propylene-vinyl acetate copolymer.

Among these copolymers, the polyolefin thermoplastic elastomer is preferably at least one selected from the group consisting of propylene block copolymer, ethylene-propylene copolymer, propylene-1-hexene copolymer, propylene-4-methyl-1-pentene copolymer, propylene-1-butene copolymer, ethyelne-1-hexene copolymer, ethyelne-4-methyl-pentene copolymer, ethylene-1-butene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer and propylene-vinyl acetate copolymer; more preferably at least one selected from the group consisting of ethylene-propylene copolymer, propylene-1-butene copolymer, ethylene-1-butene copolymer, ethylene-methyl methacrylate copolymer, ethylene-methyl acrylate copolymer, ethylene-ethyl acrylate copolymer and ethylene-butyl acrylate copolymer.

It is possible to combine two or more kinds of polyolefin resins, such as ethylene and propylene. The content of the polyolefin resin in the polyolefin thermoplastic elastomer is preferably from 50% by mass to 100% by mass.

The number average molecular weight of the polyolefin thermoplastic elastomer is preferably from 5000 to 10000000. When the number average molecular weight of the polyolefin thermoplastic elastomer is from 5000 to 10000000, a resin material having sufficient mechanical properties and excellent processability can be obtained. From the same viewpoint, the number average molecular weight of the polyolefin thermoplastic elastomer is more preferably from 7000 to 1000000, further preferably from 10000 to 1000000. When the number average molecular weight is within this rage, mechanical properties and processability of the resin material can be further improved.

The number average molecular weight of the polymer that forms a soft segment is preferably from 200 to 6000, from the viewpoint of toughness and flexibility at low temperature. The mass ratio (x : y) of the hard segment (x) and the soft segment (y) is preferably from 50 : 50 to 95 : 5, more preferably from 50 : 50 to 90 : 10, from the viewpoint of moldability.

The polyolefin thermoplastic elastomer can be synthesized by a known process for copolymerization.

Examples of the commercially available products of the polyolefin thermoplastic elastomer include the TAFMER series of Mitsui Chemicals, Inc. (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480 and P-0680), the NUCREL series of Du Pont-Mitsui Polychemicals Co., Ltd. (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C and N035C), the ELVALOY AC series (for example, 1125AC, 1209AC, 1218AC, 1609AC, 1820AC, 1913AC, 2112AC, 2116AC, 2615AC, 2715AC, 3117AC, 3427AC and 3717AC), the ACRYFT series of Sumitomo Chemical Co., Ltd., the EVATATE series of Sumitomo Chemical Co., Ltd., the ULTRACENE series of Tosoh Corporation, the PRIME TPO series (for example, E-2900H, F-3900H, E-2900, F-3900, J-5900, E-2910, F-3910, J-5910, E-2710, F-3710, J-5910, E-2740, F-3740, R110MP, R110E, T310E and M142E).

### (Thermoplastic resin)

The resin composition may include a thermoplastic resin. By including a thermoplastic resin, for example, it is possible to adjust the elastic modulus of the resin composition to be within a desired range. Since a thermoplastic resin generally has a higher elastic modulus, inclusion of a thermoplastic resin tends to increase the elastic modulus of the resin composition.

The thermoplastic resin to be included in the resin composition is preferably the same kind as the thermoplastic elastomer included in the resin composition. For example, when the resin composition includes a polyester thermoplastic elastomer as the thermoplastic elastomer, the thermoplastic resin to be included in the resin composition is preferably a polyester thermoplastic resin.

Examples of the thermoplastic resin to be included in the resin composition include a polyester thermoplastic resin, a polyamide thermoplastic resin, a polyolefin thermoplastic resin, a polyurethane thermoplastic resin, a polyvinyl chloride thermoplastic resin and a polystyrene thermoplastic resin. The resin composition may include a single kind of thermoplastic resin or two or more kinds thereof in combination.

### -Polyester thermoplastic resin-

Examples of the polyester thermoplastic resin include an aliphatic polyester such as polylactic acid, polyhydroxy-3-butyl butyrate, polyhydroxy-3-hexyl butylate, poly(ε-caprolactone), polyenanthonolactone, polycaprylolactone, polybutylene adipate and polyethylene adipate; and an aromatic polyester such as polyethylene terephthalate, polybutylene terephthalate, polyethylene naphthalate and polybutylene naphthalate. Among these, from the viewpoint of heat resistance and processability, polybutylene terephthalate is preferred.

As a commercial product of the polyester thermoplastic resin, for example, DURANEX series (such as 2000 and 2002) from Polyplastics Co., Ltd., NOVADURAN series (such as 5010R5 and 5010R3-2) from Mitsubishi Engineering-Plastics Corporation, and TORAYCON series (such as 1401X06 and 1401X31) from Toray Industries, Inc. may be used.

### -Polyamide thermoplastic resin-

Examples of the polyamide thermoplastic resin include a polyamide obtained by ring-opening polycondensation of ε-caprolactam (amide 6), a polyamide obtained by ring-opening polycondensation of undecane lactam (amide 11), a polyamide obtained by ring-opening polycondensation of lauryl lactam (amide 12), a polyamide obtained by polycondensation of a diamine and a dibasic acid (amide 66), and a polyamide having m-xylylenediamine as a constituent unit (amide MX).

Amide 6 may be expressed by {CO-(CH₂)₅-NH}ₙ, for example. Amide 11 may be expressed by {CO-(CH₂)₁₀-NH}ₙ, for example. Amide 12 may be expressed by {CO-(CH₂)₁₁-NH}ₙ, for example. Amide 66 may be expressed by {CO(CH₂)₄CONH(CH₂)₆NH}ₙ, for example. Amide MX may be expressed by the following Formula (A-1). In these formulae, n represents the number of repeating units.

As a commercial product of amide 6, for example, the UBE NYLON series (such as 1022B and 1011FB) from Ube Industries, Ltd. can be used. As a commercial product of amide 11, for example, the RILSAN B series from ARKEMA can be used. As a commercial product of amide 12, for example, the UBE NYLON series (such as 3024U, 3020U and 3014U) from Ube Industries, Ltd. can be used. As a commercial product of amide 66, for example, the UBE NYLON series (such as 2020B and 2015B) from Ube Industries, Ltd. can be used. As a commercial product of amide MX, for example, the MX NYLON series (such as S6001, S6021 and S6011) from Mitsubishi Gas Chemical Company, Inc. can be used.

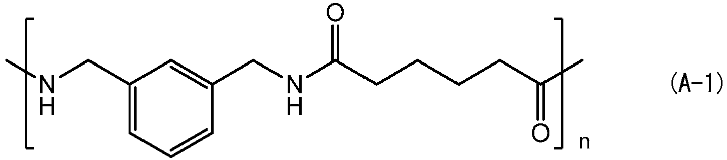

The polyamide thermoplastic resin may be a homopolymer that consists only of the aforementioned structural unit, or a copolymer of the structural unit and other monomers. When the polyamide thermoplastic resin is a copolymer, the content of the structural unit as described above is preferably 40% by mass or more.

### -Polyolefin thermoplastic resin-

Examples of the polyolefin thermoplastic resin include polyethylene thermoplastic resin, polypropylene thermoplastic resin and polybutadiene thermoplastic resin. Among these, from the viewpoint of heat resistance and processability, polypropylene thermoplastic resin is preferred.

Specific examples of the polypropylene thermoplastic resin include a propylene homopolymer, a propylene-α-olefin random copolymer and a propylene-α-olefin block copolymer. Examples of the α-olefin include α-olefins having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradodecene, 1-hexadecene, 1-octadecene and 1-eicosene.

### (Zinc cyanurate)

From the viewpoint of a balance between an effect of improving the adhesion and other components, the content of the zinc cyanurate with respect to a total amount of the resin composition is preferably from 0.1% by mass to 5% by mass, more preferably from 0.5% by mass to 2% by mass.

### (Other components)

The resin composition may include a component other than a resin and zinc cyanurate. Examples of the other components include a rubber, a filler (such as silica, calcium carbonate and clay), an anti-aging agent, a plasticizer, a color former, a weathering stabilizer and a reinforcing agent.

When the resin composition includes a component other than the resin and zinc cyanurate, the total amount of the resin and zinc cyanurate in the resin composition is preferably 50% by mass or more, more preferably 70% by mass or more, further preferably 80% by mass or more.

From the viewpoint of cracking resistance, the weight average molecular weight of the resins included the resin composition is preferably 35,000 or more, more preferably 37,500 or more, further preferably 40,000 or more.

The upper limit of the weight average molecular weight of the resins included in the resin composition is not particularly limited. The weight average molecular weight of the resin may be 100,000 or less.

In the present disclosure, the weight average molecular weight of the resins included in the resin composition refers to a weight average molecular weight of an entirety of the resins included in the resin composition. The weight average molecular weight of the resins may be measured by a method described in the Examples.

From the viewpoint of ensuring a sufficient degree of rigidity, the resin composition preferably has a tensile modulus of elasticity of 500 MPa or more, more preferably 550 MPa or more, further preferably 600 MPa or more. The resin composition does not specify an upper limit of the tensile modulus of elasticity, but the resin composition may have a tensile modulus of elasticity of 1,000 MPa or less.

In the present disclosure, the tensile modulus of elasticity of the resin composition may be measured by a method as described in the Examples.

From the viewpoint of handleability, the resin composition is preferably in a solid form. Specifically, the resin composition preferably exhibits a melting point or a glass transition temperature at a range of 20°C or higher in differential scanning calorimetry (DSC).

### (Application of resin composition)

The application of the resin composition is not particularly limited. As mentioned above, since the resin composition exhibits excellent adhesion with respect to a metal member, the resin composition is suitably used as an adhesive for bonding metal members or bonding a metal member with a non-metal member (such as a resin member). Further, since the resin composition exhibits excellent cracking resistance, the resin composition is suitably used in a situation to which a physical force is applied.

In an embodiment, the resin composition is used to form a resin layer of a resin-metal composite member as described later.

### <Resin-metal composite member>

The resin-metal composite member according to the present embodiment is a resin-metal composite member, comprising a metal member and a resin layer that is disposed around the metal member, wherein the resin layer is formed from the resin composition as mentioned above.

The shape of the resin-metal composite member is not particularly limited, and examples thereof include a cord-like shape, a sheet-like shape and a plate-like shape. The resin-metal composite member may include a single metal member or may include plural metal members.

The application of the resin-metal composite member is not particularly limited, and examples thereof include a reinforcing belt member that is disposed at an outer periphery of a tire frame that constitutes a tire, or at an outer periphery of a carcass; and a bead member that is disposed at a position at which a tire is in contact with a rim.

The thickness of the resin layer is not particularly limited. For example, the thickness of the resin layer may be from 0.5 µm to 500 µm, more preferably from 1 µm to 150 µm, further preferably from 1 µm to 100 µm.

The thickness of the resin layer is an arithmetic value of the values measured from five SEM images of arbitrarily selected five cross-sections, which are obtained by cutting the resin-metal composite member in a layered direction of the metal member and the resin layer. In each SEM image, the thickness of the resin layer is measured at a position with the smallest thickness.

The resin-metal composite member may further have a cover resin layer that is disposed around the resin layer. In that case, the resin layer functions as an adhesive layer that is disposed between the metal member and the cover resin layer.

Therefore, the resin-metal composite member according to the present embodiment may be a resin-metal composite member having a metal member, an adhesive layer that is disposed around the metal member, and a cover resin layer that is disposed around the adhesive layer, wherein the adhesive layer includes a thermoplastic elastomer and an epoxy resin as resins.

The material for a cover resin layer is not particularly limited. For example, the material may be selected from the thermoplastic elastomers and the thermoplastic resins that may be included in the resin layer, as described above.

From the viewpoint of affinity to a resin layer, the cover resin layer preferably includes a resin layer that is the same kind as a resin included in the adhesive layer. For example, when the resin layer includes a polyester thermoplastic elastomer, the cover resin layer preferably includes a polyester thermoplastic elastomer or a polyester thermoplastic resin.

The cover resin layer may include a component other than a resin, as necessary. Examples of the other components include a rubber, a filler (such as silica, calcium carbonate and clay), an anti-aging agent, a plasticizer, a color former, a weathering stabilizer and a reinforcing material.

When the cover resin layer includes a component other than a resin, the total amount of the resin in the cover resin layer is preferably 50% by mass or more, more preferably 70% by mass or more, further preferably 80% by mass or more.

The thickness of the cover resin layer is not particularly limited. For example, the thickness of the cover resin layer may be from 10 µm to 1,000 µm, or may be from 50 µm to 700 µm.

The thickness of the cover resin layer is measured in the same manner as the thickness of the resin layer.

The metal member used in the resin-metal composite member is not particularly limited, and may be a metal cord, a metal plate or the like.

Examples of the metal cord include a monofilament composed of a single metal cord (single strand) and a multi-filament that is formed from twisted plural metal cords (twisted strand). From the viewpoint of improving the durability of a tire, the metal member is preferably a multi-filament.

The cross-sectional shape, diameter and the like of the metal member are not particularly restricted, and may be selected in view of the desired purposes.

When the metal member is a multi-filament including plural cords, the number of the cords is not particularly restricted. For example, the number of the cords may be from 2 to 10, preferably from 5 to 9.

When the resin-metal composite member is used as a reinforcing material for a tire, from the standpoint of improving the inner pressure resistance of a tire while reducing the weight thereof, the diameter of the metal member is preferably from 0.2 mm to 2 mm, more preferably from 0.8 mm to 1.6 mm. The diameter of the metal member is an arithmetic average value of the diameters measured at arbitrarily selected five points.

The tensile elastic modulus of the metal member is usually approximately from 100,000 MPa to 300,000 MPa, preferably from 120,000 MPa to 270,000 MPa, more preferably from 150,000 MPa to 250,000 MPa. The tensile elastic modulus of the metal member is calculated from the slope of a stress-strain curve that is obtained using a tensile tester with a ZWICK-type chuck.

The elongation at break (tensile elongation at break) of the metal member is usually approximately from 0.1% to 15%, preferably from 1% to 15%, more preferably from 1% to 10%. The tensile elongation at break of the metal member can be determined from the strain based on a stress-strain curve that is obtained using a tensile tester with a ZWICK-type chuck.

### <Tire>

The tire according to the present embodiment includes the resin-metal composite member as described above.

For example, the resin-metal composite member is used as a reinforcing belt member, which is wound around an outer periphery of a tire frame or as a carcass in a circumferential direction, or as a bead member.

In the following, a tire frame or a carcass that constitutes the tire according to the present embodiment will be explained.

### [Tire frame or carcass]

In the present disclosure, the "carcass" includes a member which is used in conventional rubber tires, such as those generally referred to as a radial carcass, a bias carcass, a semiradial carcass and the like. A carcass generally has a structure in which a reinforcing member such as a cord or a fiber is coated with a rubber material.

In the present disclosure, the "tire frame" refers to a member that forms a frame of a tire and is formed from a resin material, i.e., a member that forms a frame of a resin tire.

Examples of the elastic material that forms a carcass include a rubber material as mentioned below. Examples of the elastic material that forms a tire frame include a resin material as mentioned below.

### (Elastic material: rubber material)

The rubber material includes a rubber (rubber component), and may include other components than a rubber, such as additives, as long as the effect of the present embodiment is not impaired. The content of the rubber (rubber component) in the rubber material is preferably 50% by mass or more, more preferably 90% by mass or more, with respect to the total amount of the rubber material.

The rubber component is not particularly limited, and may be selected from conventional natural rubber and synthetic rubber. The rubber material may include a single kind of rubber component or may include two or more kinds in combination. For example, the rubber as described below or a blend of two or more kinds thereof may be used.

The natural rubber may be a sheet rubber or a block rubber, and may be any rubber selected from RSS #1 to #5.

The synthetic rubber may be diene-type synthetic rubber, diene-type copolymer rubber, special rubber, modified rubber, and the like. Specific examples of the synthetic rubber include a butadiene polymer, such as polybutadiene (BR), a copolymer of butadiene and an aromatic vinyl compound (such as SBR and NBR) and a copolymer of butadiene and other diene compounds, an isoprene polymer such as polyisoprene (IR), a copolymer of isoprene and an aromatic vinyl compound, and a copolymer of isoprene and other diene compounds, chloroprene rubber (CR), butyl rubber (IIR), halogenated butyl rubber (X-IIR), ethylene-propylene copolymer rubber (EPM), ethylene-propylene-diene copolymer rubber (EPDM), and a blend including a rubber as described above.

The rubber material may include a component other than rubber, such as an additive, as necessary.

Examples of the additive include a reinforcing agent such as carbon black, a filler, a vulcanizing agent, a vulcanization accelerator, a fatty acid or a salt thereof, a metal oxide, a process oil, and an antiaging agent.

The carcass formed from a rubber material can be obtained by heating an unvulcanized rubber to cause valcanization thereof.

### (Elastic material: resin material)

The resin material includes a resin (resin component), and may include other components than a resin, such as additives, as long as the effect of the present embodiment is not impaired. The content of the resin (resin component) in the resin material is preferably 50% by mass or more, more preferably 90% by mass or more, with respect to the total amount of the resin material.

Examples of the resin (resin component) in the resin material includes a thermoplastic resin, a thermoplastic elastomer and a thermosetting resin. From the viewpoint of running comfortability, the resin material preferably includes a thermoplastic elastomer.

Examples of the thermosetting resin and the thermoplastic elastomer include the thermosetting resins and the thermoplastic elastomers that may be included in the resin composition as described above.

Examples of the thermosetting resin include a phenol resin, a urea resin, a melamine resin and an epoxy resin.

From the viewpoint of adhesion, the resin material that forms a tire frame preferably includes a resin that is the same kind as the resin included in a cover resin layer of the resin-metal composite member.

For example, when the cover resin layer includes a polyester thermoplastic resin or a polyester thermoplastic elastomer, the tire frame preferably includes a polyester thermoplastic resin or a polyester thermoplastic elastomer.

As necessary, the elastic material (rubber material or resin material) may include other components than the rubber or the resin.

Examples of the other components include a filler (such as silica, calcium carbonate and clay), an antiaging agent, an oil, a plasticizer, a colorant, a weather resistance agent and a reinforcing agent.

### <Configuration of tire>

In the following, the tire according to the present embodiment will be described by referring to the drawings.

The drawings are schematically illustrated, and the size or the shape of the members may be exaggerated for ease of understanding. In the embodiments as described below, although the resin-metal composite member is applied at a belt portion, it is possible to apply the resin-metal composite member to the other portions such as a bead portion, in addition to a belt portion.

### (First embodiment)

The tire according to a first embodiment has a tire frame that includes a resin.

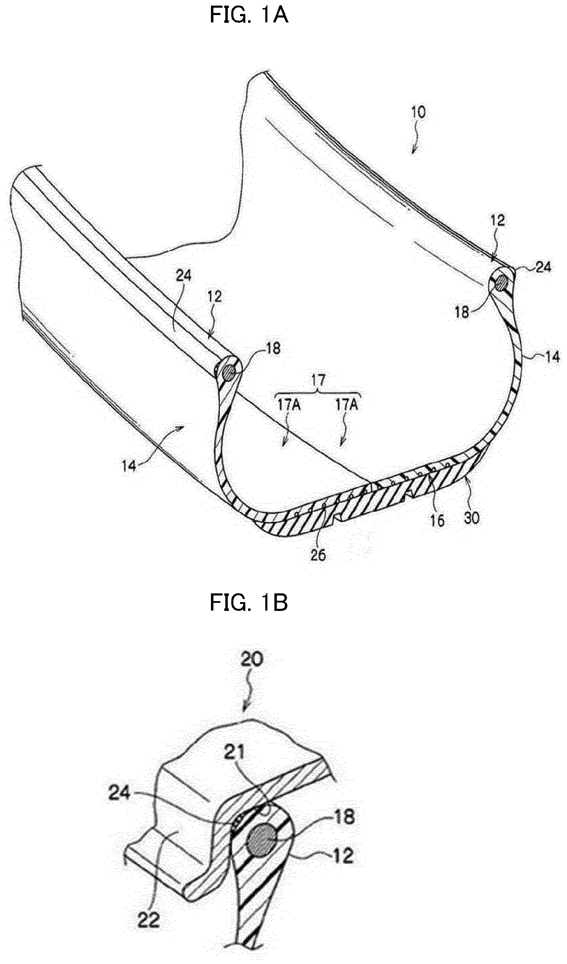

FIG. 1A is a perspective view illustrating a cross-section of a part of a tire according to the first embodiment. FIG. 1B is a cross-sectional view of a bead portion of the tire in a state of being attached to a rim (the rim is a separate member from the tire). As illustrated in FIG. 1A, tire 10 has a cross-sectional shape that is substantially the same as that of a conventional and common rubber-made pneumatic tire.

Tire 10 has tire frame 17 that includes a pair of bead portions 12, which are each in contact with bead sheet 21 and rim flange 22 of rim 20; side portions 14, which extend from bead portions 12 toward the outer side along a radial direction of the tire; and a crown portion 16 (outer circumferential portion), which connects the outer ends in the radial direction of side portions 14. Tire frame 17 is formed of a resin material.

Tire frame 17 is formed from a pair of tire frame half sections 17A (i.e., tire frame pieces) having the same shape that are bonded together at the tire equatorial plane. Each of the tire frame half sections has a ring shape in which one of bead portions 12, one of side portions 14 and a half of crown portion 16 are integrally formed by injection molding.

In bead portion 12, a ring-shaped bead core 18, formed of a steel cord, is embedded. Further, a ring-shaped sealing layer 24, which is composed of rubber having a superior sealing property than the resin material that forms the tire frame 17, is provided at a portion of bead portion 12 at which bead portion 12 contacts rim 20, or at a portion of bead portion 12 at which bead portion 12 contacts rim flange 22 of rim 20.

At crown portion 16, resin-metal composite member 26 as a reinforcing cord is wound along a circumferential direction of tire frame 17 in a spiral manner, such that at least a part of resin-metal composite member 26 is embedded in crown portion 16. At an outer side of resin-metal composite member 26 in a radial direction of the tire, tread 30 that is composed of rubber, which is a material having a superior wear resistance than the resin material that forms tire frame 17, is disposed. Details of resin-metal composite member 26 are described later.

In tire 10 according to the first embodiment, tire frame 17 is formed of a resin material. Since tire frame half sections 17A have a symmetrical shape, i.e., the same shape, production of tire frame half sections 17A can be performed with a single mold.

In tire 10 according to the first embodiment, although tire frame 17 is formed of a single kind of resin material, the embodiment is not restricted to this configuration. For example, different resin materials may be used for respective parts (e.g., side portion 14, crown portion 16 and bead portion 12) as with a case of a conventional rubber-made pneumatic tire. Further, a reinforcing material (e.g., a fiber, a cord, a nonwoven fabric, or a woven fabric, which is made of a polymer material or a metal) may be embedded in order to reinforce each part of tire frame 17. The reinforcing material may not be embedded.

In tire 10 according to the first embodiment, although tire frame half sections 17A are produced by injection molding, the production method thereof is not restricted thereto. For example, tire frame half sections 17A may be produced by vacuum molding, pressure molding, melt casting or the like. Although tire frame 17 is produced by bonding two members (tire frame half sections 17A), the production method of thereof is not restricted thereto. For example, tire frame 17 may be produced as a single member by a molten core method using a metal having a low melting point, a split core method or blow molding. Tire frame 17 may be produced by bonding three or more members.

At bead portion 12 of tire 10, a ring-shaped bead core 18 formed of a metal cord such as a steel cord is embedded. It is possible to use the resin-metal composite member according to the present embodiment as a member including bead core 18. For example, the resin-metal composite member according to the present embodiment may be used to form bead portion 12.

Bead core 18 may be formed of an organic fiber cord, an organic fiber cord having a resin coating, a hard resin or the like, instead of a steel cord. Bead core 18 may be omitted when the rigidity of bead portion 12 is sufficiently ensured and there is no problem in fitting of bead portion 12 with rim 20.

A ring-shaped sealing layer 24, which is composed of rubber, is formed at a portion of bead portion 12 that comes into contact with rim 20, or at least at a portion of bead portion 12 that comes into contact with rim flange 22 of rim 20. Sealing layer 24 may be formed also at a portion at which tire frame 17 (bead portion 12) is in contact with bead sheet 21. Sealing layer 24 is preferably formed of a rubber of the same kind as a rubber used for an outer surface of a bead portion of a conventional rubber-made pneumatic tire. In a case of forming tire frame 17 with a resin material, sealing layer 24 may be omitted if the resin material that forms tire frame 17 can ensure a sufficient sealing property with the rim 20.

Sealing layer 24 may be formed of a thermoplastic resin or a thermoplastic elastomer that has a superior sealing property as compared with a resin material that forms tire frame 17.

In the following, a reinforcing belt member formed of resin cord member 26 will be described. It is possible to use the resin-metal composite member as resin cord member 26.

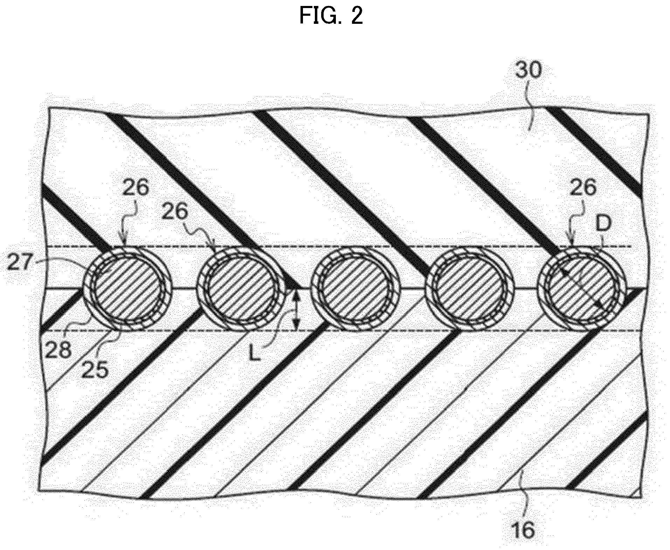

Fig. 2 shows a sectional view of tire 10 of the first embodiment, in which resin cord member 26 is embedded in a crown portion of tire frame 17.

As shown in Fig. 2, resin cord material 26 is disposed in a spiral manner, and at least a part of resin cord member 26 is embedded in crown portion 16. At a portion at which resin cord member 26 is embedded in crown portion 16, resin cord member 26 is in close contact with the resin material that forms crown portion 16 (tire frame 17). The L in Fig. 2 indicates a depth of embedment of resin cord member 26 in crown portion 16 (tire frame 17) in a direction of rotation axis of the tire. In an embodiment, the depth L is 1/2 of D, which is the diameter of resin cord member 26.

Resin cord member 26 has a structure in which metal member 27 (for example, a steel cord formed by twisting steel fibers) is covered with cover resin layer 28 via adhesive layer 25.

At an outer side of resin cord member 26, tread 30 made of rubber is disposed. Tread 30 has a tread pattern of plural grooves on a surface that contacts the ground, like a conventional rubber-made pneumatic tire.

In an embodiment, resin cord member 26, having cover resin layer 28 that includes a thermoplastic elastomer, is embedded in tire frame 17 that is formed of a resin material of the same kind as the thermoplastic elastomer included in cover resin layer 28, such that resin cord member 26 is in close contact with tire frame 17. In this case, a large contact area of cover resin layer 28 and tire frame 17 is secured, thereby improving the durability of resin cord member 26 and tire frame 17. As a result, a tire having an excellent durability can be obtained.

When resin cord member 26 is embedded in crown portion16, the depth of embedment of resin cord member 26 to crown portion 16 (L) is preferably 1/5 or more of the diameter D of resin cord member 26, more preferably greater than 1/2 of the diameter D of resin cord member 26. In a more preferred embodiment, resin cord member 26 is totally embedded in crown portion 16. When L is greater than 1/2 of the diameter D of resin cord member 26, protrusion of resin cord member 26 from the embedded portion is suppressed. When resin cord member 26 is totally embedded in crown portion 16, the surface of crown portion 16 becomes flat, and inclusion of air around resin cord member 26 is suppressed even when a member is disposed on crown portion 16 in which resin cord member 26 is embedded.

In tire 10 according to the first embodiment, tread 30 is formed of rubber. However, tread 30 may be formed of a thermoplastic resin material having an excellent abrasion resistance.

In the following, a manufacturing method of the tire according to the first embodiment will be explained.

### (Tire frame-forming process)

First, a pair of tire frame halves, which are supported by a supporting ring formed of a thin metal material, are disposed to face each other. Then, a welding mold is disposed so as to contact the outer surface of the welding potion of the tire frame halves. The welding mold is configured such that it applies a predetermined pressure to a portion around the welding portion (abutting portion) of the tire frame halves (not shown). Then, a pressure is applied to a portion around the welding portion of the tire frame halves at a temperature that is equal to or higher than the melting point (or the softening point) of the thermoplastic resin material used for the tire frame, whereby the welding portion is melted and the tire frame halves are thermally bonded, and tire frame 17 is formed.

### (Resin cord member-forming process)

In the following, a process of forming a resin cord member, in which the resin cord member is formed of a resin-metal composite member according to the present embodiment, will be explained.

Metal member 27 is reeled out from a reel and the surface thereof is washed. Subsequently, metal member 27 is covered with a material for forming an adhesive layer, thereby forming adhesive layer 25. This is further covered with a resin material to form cover resin layer 28, thereby obtaining resin cord member 26. The obtained resin cord member 26 is reeled in reel 58.

### (Resin cord member-winding process)

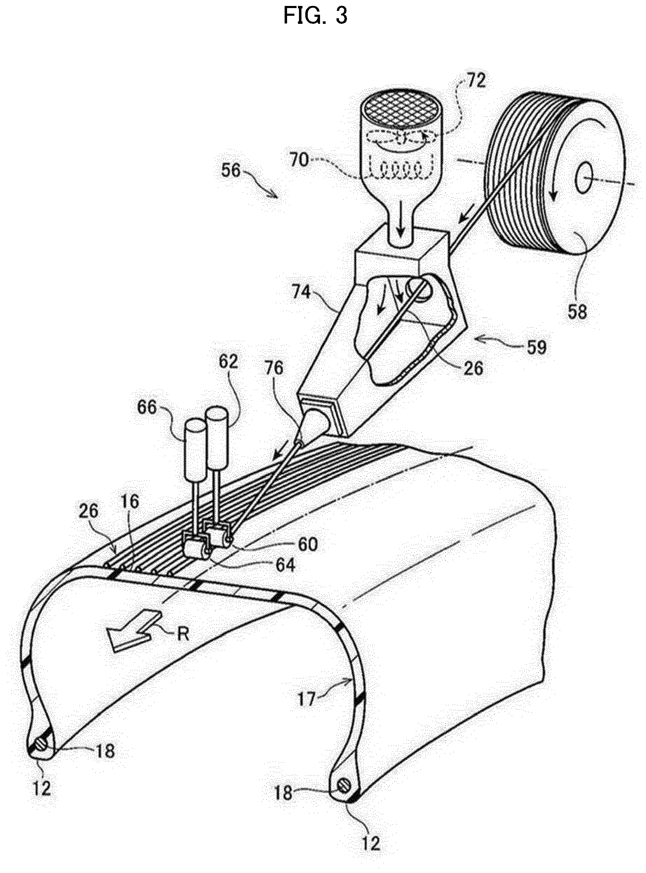

In the following, a process of winding a resin cord member will be explained by referring to Fig. 3.

Fig. 3 is a drawing illustrating the operation of positioning resin cord member 26 on a crown portion of a tire frame with a heater and rollers.

In Fig. 3, resin cord member supply apparatus 56 is equipped with reel 58 around which resin cord member 26 is wound; heating apparatus 59 disposed downstream of reel 58 in a direction in which resin cord member 26 is conveyed; first roller 60 disposed downstream of reel 58 in a direction in which resin cord member 26 is conveyed; first cylinder 62 that moves first roller 60 in a direction of contacting or separating from a surface of a tire; second roller 64 disposed downstream of first roller 60 in a direction in which resin cord member 26 is conveyed; and second cylinder 66 that moves second roller 64 in a direction of contacting or separating from a surface of a tire. Second roller 64 may be used also as a cooling roller made of metal. Surfaces of first roller 60 and second roller 64 are coated with a fluororesin (in this embodiment, TEFLON (registered trade name)) in order to suppress adhesion of a molten or softened resin material. By using this apparatus, the heated resin-metal composite is tightly integrated with the resin of a tire frame.

Heating apparatus 59 is equipped with heater 70 and fan 72 for generating a hot wind. Further, heating apparatus 59 is equipped with heating box 74 having a space in which the generated hot wind is supplied and resin cord member 26 is allowed to pass, and outlet 76 from which resin cord member 26 that has been heated is discharged.

First, the temperature of heater 70 of heating apparatus 59 is increased, and a hot air is supplied to heating box 74 by a wind generated by rotating fan 72. Then, resin cord member 26 is reeled out from reel 58 and conveyed to heating box 74, and heated in heating box 74 (for example, to a temperature of from approximately 100°C to 250°C). The heated resin cord member 26 is conveyed through outlet 76 and disposed around crown portion 16 of tire frame 17, which is rotating in a direction shown as R in Fig. 3, in a spiral manner with a constant tension. When the cover resin layer of resin cord member 26 contacts crown portion 16, the resin material of crown portion 16 at a portion in contact with the cover resin layer of resin cord member 26 is molten or softened, and the cover resin layer is integrated with crown portion 16 by welding. At this time, resin cord member 26 is wound around so as not to form a space in such a way that adjacent parts of resin cord member 26 are welded together. In that case, inclusion of air at a portion at which resin-metal composite 26 is embedded is suppressed.

The depth of embedment of resin cord member 26 (L) may be adjusted by a heating temperature of resin cord member 26, a tension to be applied to resin cord member 26, a pressure applied by first roller 60, and the like. In an embodiment, the conditions are adjusted such that L is at least 1/5 of the diameter of resin-metal composite 26 (D).

Subsequently, tread 30 having a belt-like shape is wound around the outer surface of tire frame 17 in which resin cord member 26 is embedded, and this is subjected to heating (vulcanization) in a vulcanizing case or a mold. Tread 30 may be formed of unvulcanized rubber or vulcanized rubber.

Then, sealing layer 24, which is formed of vulcanized rubber, is bonded to bead portion 12 of tire frame 17 with an adhesive, thereby obtaining tire 10.

In the method of producing a tire of the first embodiment, although welding of tire frame halves 17A is performed by heating the same with a welding mold, the disclosure is not limited thereto. For example, the heating may be performed by a high-frequency heater or the like. Alternatively, tire frame halves 17A may be welded by preliminarily softening or melting the same by heating with a hot air or infrared radiation, and then applying a pressure with a welding mold.

In the method of producing a tire of the first embodiment, although resin cord member supply apparatus 56 has two rollers (first roller 60 and second roller 64), the disclosure is not limited thereto. For example, resin cord member supply apparatus 56 may have either one of these rollers.

In the method of producing a tire of the first embodiment, although a surface of tire frame 17 is melted or softened at a portion in contact with resin cord member 26 that has been heated, the disclosure is not limited thereto. For example, embedment of resin cord member 26 in crown portion 16 may be performed by heating a surface of crown portion 16 by using a hot air generator instead of heating resin cord member 26.

In the method of producing a tire of the first embodiment, although the heating of resin cord member 26 is performed by using a heater and a fan, the disclosure is not limited thereto. For example, resin cord member 26 may be heated directly with radiation heat (such as infrared rays).

In the method of producing a tire of the first embodiment, although a melted or softened portion of the thermoplastic resin material in which resin cord member 26 is embedded is cooled by second roller 64 made of metal, the disclosure is not limited thereto. For example, the melted or softened portion may be cooled with a cold air.

The winding of resin cord member 26 is performed in a spiral manner for ease of production. However, the winding of resin cord member 26 may be performed in a different manner, such as positioning the same in a discontinuous manner in a width direction.

The tire of the first embodiment has a single layer of resin cord member 26, but the tire may have two or more layers of resin cord member 26.

In the method of producing a tire of the first embodiment, a belt-like tread 30 is wound around an outer periphery of tire frame 17 to which resin cord member 26 is embedded, and is subsequently heated (vulcanized). However, a belt-like tread 30 that has been preliminarily vulcanized may be bonded to an outer periphery of tire frame 17 with an adhesive or the like. Examples of a belt-like tread that has been vulcanized include a pre-cure tread used for a retread tire.

The tire produced by the method of producing a tire of the first embodiment is a tubeless tire (i.e., an air room is formed between tire 10 and rim 20 by attaching bead portion 12 to rim 20). However, the disclosure is not limited thereto. For example, the tire may have a different structure such as a complete tube shape.

### (Second embodiment)

The tire according to the second embodiment has a carcass instead of a tire frame.

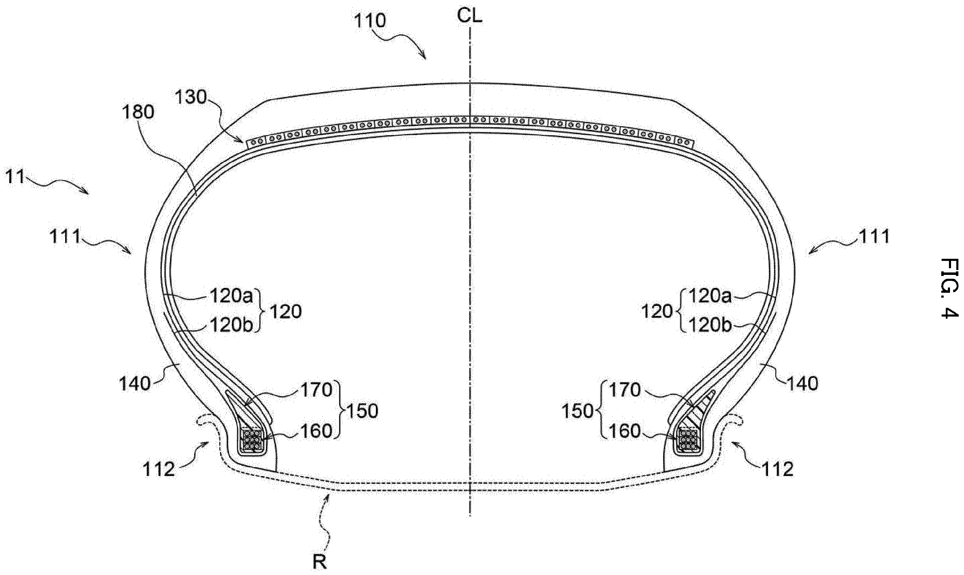

Fig. 4 is a schematic sectional view in width direction of tire 11 according to the present embodiment. In Fig. 4, rim R is shown by a dashed line for ease of explanation.

As shown in Fig. 4, tire 11 has a pair of bead portions 112 that are disposed at each side of tire 11 with respect to the tire center line CL; a pair of side portions 111 that extend from bead portions 112 toward the outer side in a radial direction of tire 11; and tread portion 110 that connects side portions 111. Each of bead portions 112 includes bead core 160, respectively.

In an example shown in Fig. 4, carcass 120, including at least one layer of carcass ply (one layer of carcass ply in a case of Fig. 4), extends in an toroidal form between bead cores 16 included in bead portions 112. The carcass ply in carcass 120 may be, for example, a cord made of steel or an organic fiber having a rubber coating.

In an example shown in Fig, 4, carcass 120 includes main body 120a that extends in an toroidal form between bead cores 16; and a pair of folded portions 120b that are folded from the inner side in a radial direction of the tire toward the outer side in a width direction of the tire around bead cores 160, at each side with respect to the tire center line CL.

In an example shown in Fig. 4, inner liner 180 for preventing air leakage of the tire is provided inside tread portion 110 and side portion 111. At an outer side in a radial direction of the tire of tread portion 110, at a region corresponding to a crown of carcass 120, belt 130 formed of at least one belt layer (one belt layer in a case of Fig. 4) is disposed. The belt layer is formed by, for example, winding a reinforcing cord having a resin coating around a portion at which the belt layer is to be provided.

In an example shown in Fig. 4, bead portion 112 includes bead member 150 that is formed of bead filler 170 and bead core 160. Bead core 160 is positioned at an inner side in a radial direction of the tire of bead filler 170 and includes a metallic cord such as a steel cord. In an example shown in Fig. 4, bead member 150 is embedded in rubber 140.

In an example shown in Fig. 4, belt 130 and bead core 160 may be formed from the resin-metal composite member as described above. In that case, the resin-metal member may form either one of belt 130 or bead core 160, or may form both of belt 130 and bead core 160.

### [Examples]

In the following, the present disclosure is explained in details by referring to the Example. However, the present disclosure is not limited to the Examples in any way.

### <Preparation of resin composition>

Resin compositions were prepared by mixing the materials as described in Table 1 in the amounts as described in Table 1 (parts by mass). The following are the details of the materials shown in Table 1. The results of evaluations (1) to (3) of the resin compositions are shown in Table 1.
TPC1: polyester thermoplastic elastomer (DuPont-Toray Co., Ltd., HYTREL 6367)
TPC2: polyester thermoplastic elastomer (DuPont-Toray Co., Ltd., HYTREL 7247)
TPC3: polyester thermoplastic elastomer (DuPont-Toray Co., Ltd., HYTREL 6377)
TPC4: polyester thermoplastic elastomer having maleic anhydride group (Mitsubishi Chemical Corporation, PREMALLOY GQ741, maleic anhydride equivalent amount: approximately 9.5 × 10⁻⁵ g/eq)
PBT: polybutylene terephthalate (Toray Industries, Inc., TORAYCON 1401X06)
Epoxy resin 1: epoxy resin shown by the following Formula (A) (Nippon Kayaku Co., Ltd., XD-1000, epoxy equivalent: 245 g/eq to 260 g/eq, softening point: 68°C to 78°C)
Epoxy resin 2: epoxy resin shown by the following Formula (B) (Nippon Kayaku Co., Ltd., NC-7000L, epoxy equivalent: 223 g/eq to 238 g/eq, softening point: 83°C to 93°C)
Additive: zinc cyanurate (Nissan Chemical Corporation, STARFINE F-10)

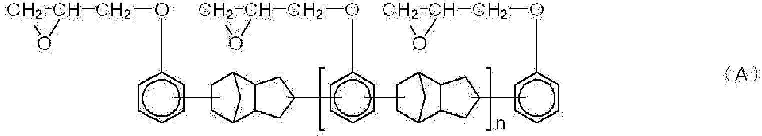

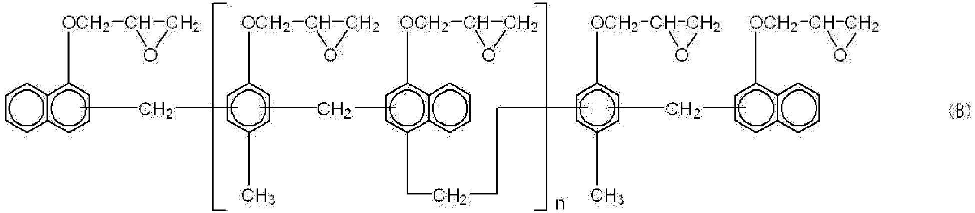

The tensile modulus of elasticity, brass peel force and weight average molecular weight of the resin compositions were measured by the following methods. The results are shown in Table 1.

### (1) Tensile modulus of elasticity

The tensile modulus of elasticity (MPa) is measured by a method according to JIS K7113:1995. Specifically, the measurement is performed using TENSILON RTF-1210 (1KN), A&D, for example, at a tensile rate of 100 mm/min.

It is possible to measure the tensile modulus of elasticity of the resin composition by preparing a sample from a material that is the same as the resin composition. Specifically, the measurement may be performed using a sample which is prepared by forming a plate of 2 mm in thickness from the resin composition by injection molding, and punching the plate into a JIS 3 dumbbell shape.

### (2) Brass peel force

The adhesion of the resin composition with respect to a metal member is measured by a peeling test. Specifically, a laminate is prepared by melting a resin plate formed of the resin composition and bonding the same to a test piece made of brass (Cu/Zn=65/35) having a width of 20 mm, by thermal compression using a press machine at 230°C. The laminate is subject to a 180° peeling test using an autograph (AGS-F (5KN), Shimadzu Corporation) at room temperature (25°C) and a tensile rate of 100 mm/min, thereby measuring a peel force (N). The measured value is converted to an index number relative to the measured value of Example 1 taken as 100.

### (3) Weight average molecular weight

The weight average molecular weight (Mw) is calculated as a value in terms of polystyrene by gel permeation chromatography (GPC). Specifically, the resin composition is dissolved in a solvent such as hexafluoroisopropanol (HFIP), an insolluble matter is removed by filtering, and a relative molecular weight with respect to a reference substance is obtained by GPC. The measurement is performed by using ECOSEC (HLC-8320GPC) manufactured by Tosoh Corporation, and HFIP as a solvent.

### (4) Cracking resistance

A resin-metal composite member having an adhesive layer formed from the resin composition obtained in Example 1 or Comparative Example 1, and a tire having the resin-metal composite member disposed at a crown portion were prepared, and the cracking resistance of the adhesive layer was evaluated.

Specifically, a cord-like resin-metal composite member having an adhesive layer and a cover resin layer around a multi-filament in this order is prepared by extrusion molding. The multi-filament has an average diameter of 1.15 mm, and is obtained by twisting seven monofilaments having an average diameter of 0.35 mm (made of steel, strength: 280N, rate of elongation: 3%). The adhesive layer is formed from the resin composition. The cover resin layer is formed from a polyester thermoplastic elastomer (DuPont-Toray Co., Ltd., HYTREL 5557) for forming a cover resin layer. The thickness of the adhesive layer is adjusted to be from 1 µm to 500 µm, and the thickness of the cover resin layer is adjusted to be from 10 µm to 100 µm.

A rubber tire (size: 225/40R18) was prepared by winding the resin-metal composite member around a crown portion, and an inner pressure was adjusted to be 3.0 kg/cm² in a room at 25±2°C and left to stand for 25 hours. Thereafter, the air pressure was adjusted again, and the tire was run for 6,000 km at 60 km/h on a drum with a diameter of 3 m. The tire after the running was cut along a radial direction, and a section of the adhesive layer was observed with an optical microscope to evaluate a state of occurrence of cracking.

As a result, the number of cracks found at a section of the adhesive layer after the running in Comparative Example 1 was 5 or more, whereas the number of cracks found at a section of the adhesive layer after the running in Example 1 was less than 5.

**Table 1**

| | Examples | | | | | | Comparative Examples | | |
|---|---|---|---|---|---|---|---|---|---|
| | 1 | 2 | 3 | 4 | 5 | 6 | 1 | 2 | 3 |
| TPC 1 | 80 | 0 | 0 | 80 | 80 | 80 | 0 | 80 | 80 |
| TPC 2 | 0 | 100 | 0 | 0 | 0 | 0 | 0 | 0 | 0 |
| TPC 3 | 0 | 0 | 80 | 0 | 0 | 0 | 0 | 0 | 0 |
| TPC 4 | 0 | 0 | 0 | 0 | 0 | 0 | 100 | 0 | 0 |
| PBT | 20 | 0 | 20 | 20 | 20 | 20 | 0 | 20 | 20 |
| Epoxy resin 1 | 10 | 0 | 10 | 10 | 10 | 10 | 0 | 0 | 10 |
| Epoxy resin 2 | 0 | 10 | 0 | 0 | 0 | 0 | 0 | 0 | 0 |
| Zinc cyanurate | 1 | 1 | 1 | 0.5 | 1.5 | 2 | 0 | 0 | 0 |
| Epoxy resin content [mass%] | 9.1% | 9.1% | 9.1% | 9.1% | 9.1% | 9.1% | 0.0% | 0.0% | 9.1% |
| Zinc cyanurate content [mass%] | 0.9% | 0.9% | 0.9% | 0.5% | 1.4% | 1.8% | 0.0% | 0.0% | 0.0% |
| Tensile modulus of elasticity [MPa] | 597 | 563 | 531 | 601 | 613 | 603 | 634 | 706 | 681 |
| Brass peel force | 100 | 75 | 79 | 91 | 93 | 94 | 48 | 0 | 35 |
| Mw | 41853 | 43000 | 54828 | 41958 | 41867 | 42352 | 30480 | 40496 | 41757 |

In Table 1, the weight average molecular weight in Example 2 is a predicted value.

As shown in the results, the resin compositions prepared in the Examples, including an epoxy resin and zinc cyanurate, exhibit superior brass peel force to the resin compositions prepared in Comparative Example 1 and Comparative Example 2, including neither an epoxy resin nor zinc cyanurate, and the resin composition prepared in Comparative Example 3, including an epoxy resin but not including zinc cyanurate.

Further, the resin compositions prepared in the Examples exhibit excellent cracking resistance when used as an adhesive layer of a resin-metal composite member of a tire.

## Claims

1. A resin composition, comprising a thermoplastic elastomer and an epoxy resin as resins, and zinc cyanurate.

2. The resin composition according to claim 1, wherein a content of the zinc cyanurate with respect to a total amount of the resin composition is from 0.1% by mass to 5% by mass.

3. The resin composition according to claim 1 or claim 2, wherein a content of the epoxy resin with respect to a total amount of the resin composition is 15% by mass or less.

4. The resin composition according to any one of claim 1 to claim 3, wherein a content of the epoxy resin with respect to a total amount of the resin composition is 1% by mass or more.

5. The resin composition according to any one of claim 1 to claim 4, wherein an epoxy equivalent of the epoxy resin is from 100 g/eq to 300 g/eq.

6. The resin composition according to any one of claim 1 to claim 5, having a value of A/B, wherein A is a content of the epoxy resin with respect to a total amount of the resin composition (% by mass) and B is an epoxy equivalent of the epoxy resin (g/eq), of from 0.003 to 0.15.

7. The resin composition according to any one of claim 1 to claim 6, wherein the thermoplastic elastomer comprises a polyester thermoplastic elastomer.

8. The resin composition according to any one of claim 1 to claim 7, further comprising a thermoplastic resin.

9. The resin composition according to any one of claim 1 to claim 8, wherein a weight average molecular weight of an entirety of the resins is 40,000 or more, measured as indicated in the specification.

10. A resin-metal composite member, comprising a metal member and a resin layer that is disposed around the metal member, wherein the resin layer is formed from the resin composition according to any one of claim 1 to claim 9.

11. A tire, comprising the resin-metal composite member according to claim 10.

12. The tire according to claim 11, wherein the resin-metal composite member is included in at least one of a reinforcing belt member or a bead member of the tire.

## Patentansprüche

1. Harzzusammensetzung, umfassend ein thermoplastisches Elastomer und ein Epoxidharz als Harze und Zinkcyanurat.

2. Harzzusammensetzung nach Anspruch 1, wobei ein Gehalt des Zinkcyanurats mit Bezug auf eine Gesamtmenge der Harzzusammensetzung 0,1 Masse-% bis 5 Masse-% beträgt.

3. Harzzusammensetzung nach Anspruch 1 oder Anspruch 2 wobei ein Gehalt des Epoxidharzes mit Bezug auf eine Gesamtmenge der Harzzusammensetzung 15 Masse-% oder weniger beträgt.

4. Harzzusammensetzung nach einem von Ansprüche 1 bis 3, wobei ein Gehalt des Epoxidharzes mit Bezug auf eine Gesamtmenge der Harzzusammensetzung 1 Masse-% oder mehr beträgt.

5. Harzzusammensetzung nach einem von Ansprüche 1 bis 4, wobei ein Epoxidäquivalent des Epoxidharzes 100 g/Äqu. bis 300 g/Äqu. beträgt.

6. Harzzusammensetzung nach einem von Ansprüche 1 bis 5, die einen Wert von A/B von 0,003 bis 0,15 aufweist, wobei A ein Gehalt des Epoxidharzes mit Bezug auf eine Gesamtmenge der Harzzusammensetzung (Masse-%) ist und B ein Epoxidäquivalent des Epoxidharzes (g/Äqu.) ist.

7. Harzzusammensetzung nach einem von Ansprüche 1 bis 6, wobei das thermoplastische Elastomer ein thermoplastisches Polyesterelastomer umfasst.

8. Harzzusammensetzung nach einem von Ansprüche 1 bis 7, ferner ein thermoplastisches Harz umfassend.

9. Harzzusammensetzung nach einem von Ansprüche 1 bis 8, wobei ein gewichtsdurchschnittliches Molekulargewicht einer Gesamtheit der Harze 40.000 oder mehr, wie in der Beschreibung angegeben gemessen, beträgt.

10. Harz-Metall-Verbundstoffelement umfassend ein Metallstoffelement und eine Harzschicht, die um das Metallstoffelement angeordnet ist, wobei die Harzschicht aus der Harzzusammensetzung nach einem von Ansprüche 1 bis 9 besteht.

11. Reifen umfassend das Harz-Metall-Verbundstoffelement nach Anspruch 10.

12. Reifen nach Anspruch 11, wobei das Harz-Metall-Verbundstoffelement in mindestens einem aus einem verstärkenden Gürtelelement oder einem Wulstelement des Reifens eingeschlossen ist.

## Revendications

1. Composition de résine, comprenant un élastomère thermoplastique et une résine époxy en tant que résines, et du cyanurate de zinc.

2. Composition de résine selon la revendication 1, dans laquelle une teneur du cyanurate de zinc par rapport à une quantité totale de la composition de résine est de 0,1 % en masse à 5 % en masse.

3. Composition de résine selon la revendication 1 ou la revendication 2, dans laquelle une teneur de la résine époxy par rapport à une quantité totale de la composition de résine est de 15 % en masse ou moins.

4. Composition de résine selon l'une quelconque des revendications 1 à 3, dans laquelle une teneur de la résine époxy par rapport à une quantité totale de la composition de résine est de 1 % en masse ou plus.

5. Composition de résine selon l'une quelconque des revendications 1 à 4, dans laquelle un équivalent d'époxy de la résine époxy est de 100 g/éq. à 300 g/éq.

6. Composition de résine selon l'une quelconque des revendications 1 à 5, ayant un rapport de A/B d'une valeur de 0,003 à 0,15, A étant une teneur de la résine époxy par rapport à une quantité totale de la composition de résine (% en masse) et B étant un équivalent d'époxy de la résine époxy (g/éq.).

7. Composition de résine selon l'une quelconque des revendications 1 à 6, dans laquelle l'élastomère thermoplastique comprend un élastomère thermoplastique de polyester.

8. Composition de résine selon l'une quelconque des revendications 1 à 7, comprenant en outre une résine thermoplastique.

9. Composition de résine selon l'une quelconque des revendications 1 à 8, dans laquelle une masse moléculaire moyenne en poids d'une totalité des résines est de 40 000 ou plus, mesurée tel qu'il est indiqué dans les spécifications.

10. Élément composite résine-métal, comprenant un élément métallique et une couche de résine qui est disposée autour de l'élément métallique, dans lequel la couche de résine est constituée de la composition de résine selon l'une quelconque des revendications 1 à 9.

11. Pneumatique comprenant l'élément composite résine-métal selon la revendication 10.

12. Pneumatique selon la revendication 11, dans lequel l'élément composite résine-métal est inclus dans au moins un élément parmi un élément de renforcement de ceinture et un élément de talon du pneumatique.
